# EUROPEAN PATENT APPLICATION

(11) **EP 1 895 531 A2**
(43) Date of publication of application: **05.03.2008**
(21) Application number: 07017040.2
(22) Date of filing: 30.08.2007
(51) Int. Cl.: G11B 7/135

(54) **Optical pickup device**

(30) Priority: 31.08.2006 JP 2006235046
(71) Applicant: Funai Electric Co., Ltd., Daito-shi, Osaka 574-0013 (JP)
(72) Inventor: Tanabe, Noritaka, Daito-shi, Osaka 574-0013 (JP); Kamioka, Yuichi, Daito-shi, Osaka 574-0013 (JP)
(74) Representative: Grünecker, Kinkeldey, Stockmair & Schwanhäusser Anwaltssozietät

(57) **Abstract**

The present invention provides an optical pickup device in which a liquid crystal device is easily attached, mass productivity is high, a movable actuator is light, excellent response can be obtained and, moreover, the liquid crystal device can be easily controlled. In an optical pickup device in which laser beams emitted from light sources pass through a collimator lens and an objective lens and are condensed to a surface of an optical disc, a liquid crystal device for correcting spherical aberration of an outgoing light from the objective lens is provided in front of the collimator lens when viewed from the light sources. The liquid crystal device has a single electrode formed in a wide range in each of a pair of substrates facing each other while sandwiching liquid crystal. A predetermined voltage is applied to the electrode to uniformly change the refractive index of the whole electrode region in the liquid crystal device and make air conversion length between the light sources and the collimator lens variable, thereby changing the degree of parallelization of outgoing light from the collimator lens and correcting spherical aberration.

## Description

### BACKGROUND OF THE INVENTION

### 1. Field of the Invention

The present invention relates to an optical pickup device used for reading information on an optical disc in a DVD recorder, a personal computer, or the like.

### 2. Description of the Prior Art

Generally, in an optical pickup device used for a DVD recorder or the like, a laser beam emitted from a light source is converted by a collimator lens to parallel rays. The laser beam passed through the collimator lens is condensed by an objective lens onto the surface of an optical disc so as to form a light spot on the disc surface. In this case, when the light spot on the disc surface is blurred due to spherical aberration of the objective lens, the detection precision of the laser beam reflected by the disc surface deteriorates, and the adverse influence is exerted on the reproduction performance.

One of methods for correcting the spherical aberration is adjustment of the lens position by making the collimator lens movable. The method, however, needs a mechanism for driving the collimator lens and has a problem such that the configuration is complicated and the space increases accordingly. To correct the spherical aberration without requiring such a mechanism, a method using a liquid crystal device is proposed.

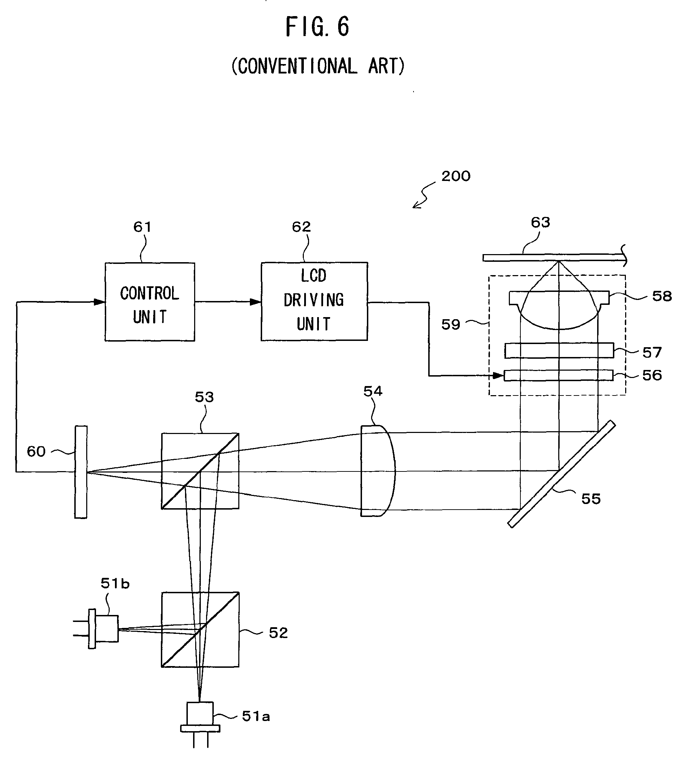

FIG. 6 is a schematic configuration diagram of an optical system as an example of a conventional optical pickup device using a liquid crystal device for correcting spherical aberration. A three-wavelength compatible optical pickup device 200 compatible with three kinds of discs of a CD (Compact Disc), a DVD (Digital Versatile Disc), and a BD (Blu-ray Disc; trademark) will be described as an example.

In FIG. 6, reference numeral 51a denotes a light source for a CD and a DVD. The light source 51a includes two semiconductor lasers for emitting an infrared laser beam having a wavelength of 780 nm and a red laser beam having a wavelength of 650 nm. Reference numeral 51b denotes a light source for a BD. The light source 51b includes a semiconductor laser for emitting a blue laser beam having a wavelength of 410 nm. A beam splitter 52 transmits the laser beam from the light source 51a so that the laser beam travels straight, and reflects the laser beam from the light source 51b so that the optical path of the laser beam is changed by 90°. A beam splitter 53 reflects the light passed through the beam splitter 52 at an angle of 90° toward a collimator lens 54 and directly transmits the light from the collimator lens 54. The collimator lens 54 converts the laser beam reflected by the beam splitter 53 to parallel rays. Reference numeral 55 denotes an upward-reflecting mirror for reflecting the beam passed through the collimator lens 54 upward at the angle of 90°.

Reference numeral 56 denotes a liquid crystal device for correcting spherical aberration, 57 denotes an aperture for regulating the numerical aperture of the laser beam incident on an objective lens 58, thereby forming a light spot having a predetermined size on the surface of an optical disc 63, and 58 indicates the objective lens for condensing the laser beam onto the disc surface. Reference numeral 59 denotes a movable actuator in which the liquid crystal device 56, the aperture 57, and the objective lens 58 are assembled. Reference numeral 60 denotes a light receiving unit for receiving the light reflected by the surface of the optical disc 63 via the optical parts 53 to 58. Reference numeral 61 denotes a control unit for processing a signal outputted from the light receiving unit 60 and performing a predetermined control, and 62 denotes a liquid crystal driving unit for driving the liquid crystal device 56 on the basis of an output from the control unit 61.

The laser beams emitted from the light sources 51a and 51b pass through the beam splitter 52 and are reflected by the beam splitter 53 at 90°, converted by the collimator lens 54 to parallel rays, pass through the upward-reflecting mirror 55, the liquid crystal device 56, the aperture 57, and the objective lens 58, and are condensed to the surface of the optical disc 63, thereby forming a minute light spot. The reflection light reflected by the surface of the optical disc 63 passes through the optical parts 53 to 58 and is received by the light receiving unit 60. A signal outputted from the light receiving unit 60 is supplied to the control unit 61. The control unit 61 controls the liquid crystal driving unit 62 on the basis of the output signal of the light receiving unit 60. The refractive index of the liquid crystal device 56 is controlled by the liquid crystal driving unit 62 as described later. The control unit 61 detects a focus error and a tracking error on the basis of the output signal of the light receiving unit 60, and performs servo controls such as a focus control and a tracking control. Since a servo control system is not directly related to the present invention, it is not shown in FIG. 6.

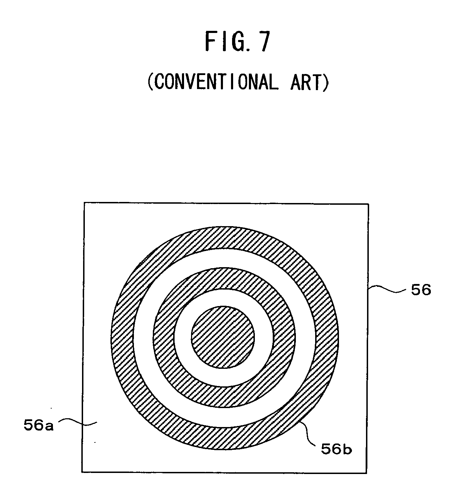

FIG. 7 is a diagram showing an electrode pattern provided for the liquid crystal device 56. The liquid crystal device 56 has a pair of substrates facing each other while sandwiching a liquid crystal and electrodes provided for each of the substrates. In FIG. 7, a substrate 56a as one of the pair of substrates and an electrode 56b formed in the substrate 56a are shown. The electrode 56b is made by three transparent electrodes (which are hatched for convenience) formed concentrically on the substrate 56a. Also in the not-shown other substrate 56a, the three concentric electrodes 56b similar to those in FIG. 7 are formed. By the liquid crystal driving unit 62, voltage is individually applied across the three pairs of electrodes.

The orientation directions of the liquid crystal molecules in the part sandwiched by the electrodes change according to the voltage applied across the electrodes, and the refractive index in the part changes. When the refractive index changes, an optical path difference occurs in light passing through the part, and a phase difference corresponding to the optical path difference occurs. In the electrode pattern of FIG. 7, the refractive indexes in the concentric three regions can be changed independently of each other. Therefore, by applying a voltage according to the spherical aberration detected by the control unit 61 on the basis of the output of the light receiving unit 60, from the liquid crystal driving unit 62 to each of the electrodes in the liquid crystal device 56, to change the refractive index, the spherical aberration in the objective lens 58 can be corrected. Japanese Unexamined Patent Application Publication Nos. 2006-120297 and 9-128785 disclose the optical pickup device in which the spherical aberration is corrected by using a partial refractive index change in the liquid crystal device.

In the case of the conventional optical pickup device shown in FIG. 6, the liquid crystal device 56 is provided between the collimator lens 54 and the objective lens 58. With such a configuration, however, at the time of attaching the liquid crystal device 56, the axis of the objective lens 58 and that of the liquid crystal device 56 have to be adjusted with precision so that no coma aberration occurs. It requires a process for adjustment and an adjusting mechanism, and a problem occurs such that the manufacturing cost increases. Additionally, since the objective lens 58 moves so as to follow the optical disc 63, the liquid crystal device 56 has to be assembled in the movable actuator 59 together with the objective lens 58. It causes another problem such that the weight of the movable actuator 59 increases, and the response (sensitivity) of the optical pickup deteriorates. Further, since the laser beam incident on the liquid crystal device 56 is the parallel rays from the collimator lens 54, to correct the spherical aberration by using a change in the refractive index of the liquid crystal device 56, a plurality of electrodes as shown in FIG. 7 have to be provided for the liquid crystal device 56 and controlled individually. There is consequently a problem such that the control is complicated and the number of wires is also large.

### SUMMARY OF THE INVENTION

The present invention has been achieved to solve the above-mentioned problems, and an object of the present invention is to provide an optical pickup device in which a liquid crystal device is easily attached so that mass productivity is high, a movable actuator is light, excellent response can be obtained and, moreover, the liquid crystal device can be easily controlled.

The present invention provides an optical pickup device including: a light source for emitting a laser beam; a collimator lens for converting the laser beam emitted from the light source to parallel rays; an objective lens for condensing the laser beam passed through the collimator lens onto a surface of an optical disc; and a liquid crystal device provided between the light source and the objective lens and correcting spherical aberration of a laser beam going out from the objective lens by changing refractive index, wherein the liquid crystal device has a pair of substrates facing each other while sandwiching liquid crystal and a single electrode provided for each of the substrates and formed in a wide range in the substrate, and is disposed in front of the collimator lens when viewed from the light source. The refractive index of a whole electrode region in the liquid crystal device is changed uniformly by application of a predetermined voltage to the electrodes, and air conversion length between the light source and the collimator lens is varied to change the degree of parallelization of outgoing light from the collimator lens, thereby correcting spherical aberration.

In the present invention, each of the electrodes of the liquid crystal device is a single electrode formed in a wide range in the substrate. Consequently, by applying a voltage across the electrodes, the refractive index of the whole electrode region in the liquid crystal device changes uniformly. Since the liquid crystal device is provided in front of the collimator lens when viewed from the light sources and a laser beam enters the liquid crystal device before the laser beam is converted to parallel rays by the collimator lens, by changing the refractive index of the liquid crystal device uniformly, the air conversion length between the light source and the collimator lens is changed. Since the degree of parallelization of light going out from the collimator lens is changed by the change in the air conversion length, spherical aberration in the objective lens can be corrected by controlling the degree of parallelization of outgoing light of the collimator lens by varying the refractive index of the liquid crystal device.

In the present invention, the liquid crystal device is provided in front of the collimator lens. Consequently, unlike the conventional case where the liquid crystal device is provided in front of the objective lens, it is unnecessary to adjust the axis of the objective lens and that of the liquid crystal device with high precision to prevent occurrence of coma aberration and, accordingly, a process for the adjustment of axis and an adjusting mechanism are unnecessary. As a result, the manufacturing cost can be decreased. In addition, it is unnecessary to assemble the liquid crystal device together with the objective lens into the movable actuator. Therefore, as compared with the conventional case where the liquid crystal device is mounted in the movable actuator, the movable actuator is lighter and the response (sensitivity) of the optical pickup is improved. Further, since the refractive index of the liquid crystal device is changed uniformly, the electrode formed in the substrate of the liquid crystal device can be a single electrode. Therefore, as compared with the conventional structure of providing the plurality of electrodes and controlling the refractive index individually, the structure of the electrode is simpler. Thus, the cost of the liquid crystal device can be reduced, and the control of the refractive index is simpler. Moreover, since wiring for supplying voltage to the electrode of one channel is sufficient, the number of wires is decreased, and the number of works and the space can be reduced.

Thus, the present invention can provide the optical pickup device in which a liquid crystal device is easily attached so that mass productivity is high, a movable actuator is light, excellent response can be obtained and, moreover, the liquid crystal device can be easily controlled.

### BRIEF DESCRIPTION OF THE DRAWINGS

FIG. 1 is a schematic configuration diagram showing an optical system of an optical pickup device according to the present invention;
FIG. 2 is a diagram showing a part of a section of a liquid crystal device;
FIG. 3 is a diagram showing a pattern of an electrode in the present invention;
FIGS. 4A to 4C are diagrams showing changes in air conversion length caused by changes in refractive index;
FIG. 5 is a diagram showing a pattern of an electrode according to another embodiment;
FIG. 6 is a schematic configuration diagram showing an optical system of a conventional optical pickup device; and
FIG. 7 is a diagram showing a conventional electrode pattern.

### DETAILED DESCRIPTION OF THE PREFERRED EMBODIMENT

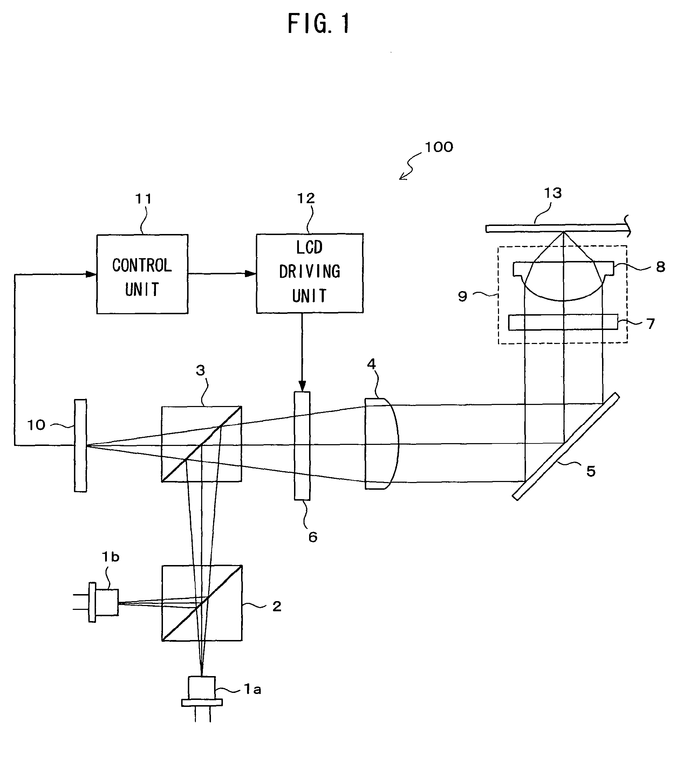

FIG. 1 is a schematic configuration diagram showing an optical system of an optical pickup device according to the embodiment of the present invention. A three-wavelength compatible optical pickup device 100 compatible with three kinds of discs of a CD, a DVD, and a BD (Blu-ray Disc) will be taken as an example.

In FIG. 1, reference numeral 1a denotes a light source for a CD and a DVD. The light source 1a includes two semiconductor lasers for emitting an infrared laser beam having a wavelength of 780 nm and a red laser beam having a wavelength of 650 nm. Reference numeral 1b denotes a light source for a BD. The light source 1b includes a semiconductor laser for emitting a blue laser beam having a wavelength of 410 nm. A beam splitter 2 transmits the laser beam from the light source 1a so that the laser beam travels straight, and reflects the laser beam from the light source 1b so that the optical path of the laser beam is changed by 90°. A beam splitter 3 reflects the light passed through the beam splitter 2 at the angle of 90° toward a collimator lens 4 and directly transmits the light from the collimator lens 4. The collimator lens 4 is a lens for converting the laser beam reflected by the beam splitter 3 to parallel rays. Reference numeral 5 denotes an upward-reflecting mirror for reflecting the beam passed through the collimator lens 4 upward at the angle of 90°.

The above-described configuration is similar to the conventional one of FIG. 6. In FIG. 6, the liquid crystal device 56 for correcting spherical aberration is provided between the collimator lens 54 and the objective lens 58. In contrast, in FIG. 1, a liquid crystal device 6 for correcting spherical aberration is provided in front of the collimator lens 4 when viewed from the light sources 1a and 1b. Reference numeral 7 denotes an aperture for regulating the numerical aperture of the laser beam incident on an objective lens 8, thereby forming a light spot having a predetermined size on the surface of an optical disc 13, and 8 indicates the objective lens for condensing the laser beam onto the disc surface. Reference numeral 9 denotes a movable actuator in which the aperture 7 and the objective lens 8 are assembled. Different from FIG. 6, the liquid crystal device 6 is not assembled in the movable actuator 9. Reference numeral 10 denotes a light receiving unit for receiving the light reflected by the surface of the optical disc 13 via the optical parts 3 to 8. Reference numeral 11 denotes a control unit for processing a signal outputted from the light receiving unit 10 and performing a predetermined control, and 12 denotes a liquid crystal driving unit for driving the liquid crystal device 6 on the basis of an output from the control unit 11.

The laser beams emitted from the light sources 1a and 1b pass through the beam splitter 2 and are reflected by the beam splitter 3 at 90°. The laser beams pass through the liquid crystal device 6 and are incident on the collimator lens 4 and converted to parallel rays. The outgoing light from the collimator lens 4 pass through the upward-reflecting mirror 5, the aperture 7, and the objective lens 8, and are condensed to the surface of the optical disc 13, thereby forming a minute light spot. The reflection light reflected by the surface of the optical disc 13 passes through the optical parts 3 to 8 and is received by the light receiving unit 10. A signal outputted from the light receiving unit 10 is supplied to the control unit 11. The control unit 11 controls the liquid crystal driving unit 12 on the basis of the output signal of the light receiving unit 10. The refractive index of the liquid crystal device 6 is controlled by the liquid crystal driving unit 12 as described later. The control unit 11 detects a focus error and a tracking error on the basis of the output signal of the light receiving unit 10, and performs servo controls such as a focus control and a tracking control. Since a servo control system is not directly related to the present invention, it is not shown in FIG. 1.

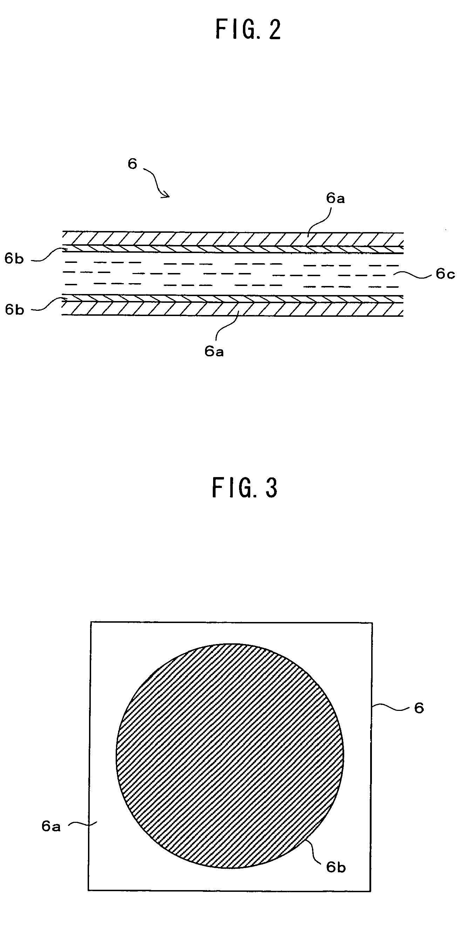

FIG. 2 is a diagram showing a part of a section of the liquid crystal device 6. The liquid crystal device 6 has a pair of substrates 6a facing each other while sandwiching a liquid crystal 6c and electrodes 6b provided for each of the substrates 6a. The substrate 6a is a transparent glass substrate, and the electrode 6b is a transparent electrode made of ITO (Indium Tin Oxide) or the like formed on the substrate 6a by deposition or the like. The liquid crystal 6c is a nematic liquid crystal or the like having a characteristic that the refractive index changes according to the orientation direction of the liquid crystal molecules (birefringence characteristic).

FIG. 3 is a diagram showing a pattern of the electrode 6b formed in the substrate 6a as one of the pair of substrates 6a. Different from the electrode pattern divided concentrically as shown in FIG. 7, the electrode 6b is a single electrode formed in a wide range of the substrate 6a. The electrode 6b is a disc-shaped transparent electrode (which is hatched for convenience). Also in the not-shown other substrate 6a, the disc-shaped electrode 6b similar to that in FIG. 3 is formed. By the liquid crystal driving unit 12, predetermined voltage is applied across the electrodes.

The orientation directions of the liquid crystal molecules in the part sandwiched by the electrodes change according to the voltage applied across the electrodes, and the refractive index in the part changes. In the case of a single electrode pattern provided in a wide range on the substrate as shown in FIG. 3, when the voltage applied across the electrodes is changed, the refractive index of the whole electrode region in the liquid crystal device 6 changes uniformly. Light entering the liquid crystal device 6 is not parallel rays passed through the collimator lens 4 but is the light (diverging rays) emitted from the light sources 1a and 1b before incidence on the collimator lens 4. Consequently, when the refractive index of the liquid crystal device 6 changes, the air conversion length between the light sources 1a and 1b and the collimator lens 4 changes. As a result, the degree of parallelization of the outgoing light from the collimator lens 4 changes.

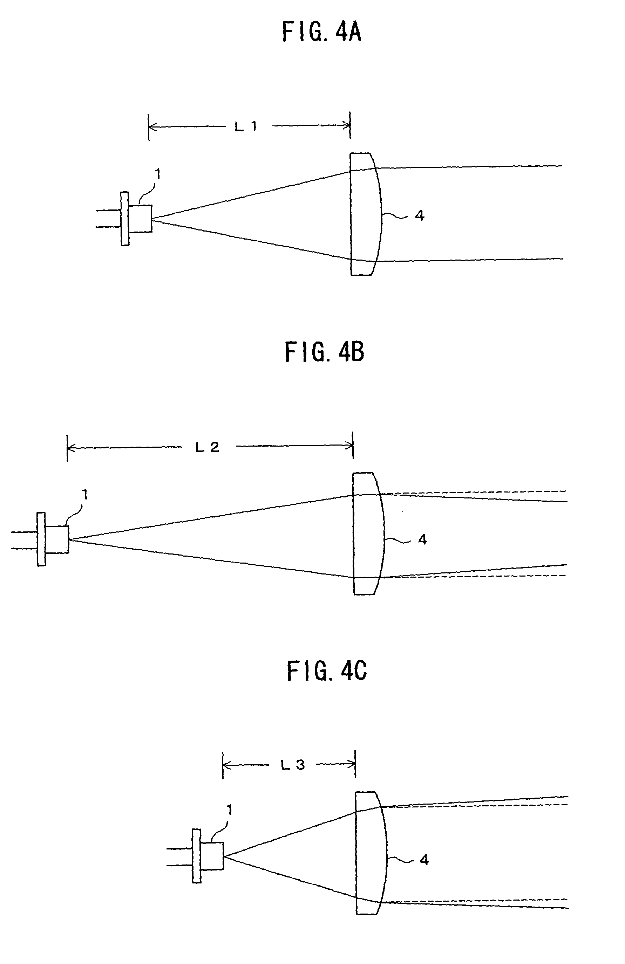

FIGS. 4A to 4C are diagrams showing a change in the air conversion length caused by a change in the refractive index. For simplicity, a simplified optical system in which light emitted from one light source 1 directly enters the collimator lens 4 is shown. The beam splitters 2 and 3 and the liquid crystal device 6 in FIG. 1 are not shown. In a normal state, as shown in FIG. 4A, the air conversion length between the light source 1 and the collimator lens 4 is L1. The air conversion length expresses the distance between the light source and the lens on assumption that only air (refractive index = 1) exists therebetween. In FIG. 4A, the position of the light source 1 coincides with the focal point of the collimator lens 4. Therefore, light emitted from the light source 1 and entered the collimator lens 4 becomes parallel rays and goes out from the collimator lens 4.

When the voltage applied to the electrode 6b in the liquid crystal device 6 is changed by the liquid crystal driving unit 12 to change the orientation direction of the liquid crystal 6c so that the refractive index of the liquid crystal device 6 increases, as shown in FIG. 4B, the state becomes equivalent to a state where the light source 1 moves rearward (far from the collimator lens 4) from its position in FIG. 4A. The air conversion length in this state is L2, and satisfies the relation of L1<L2. In the state of FIG. 4B, a virtual position of the light source 1 is rearward of the focal point of the collimator lens 4. Consequently, light from light source 1 and incident on the collimator lens 4 becomes convergent light traveling to the inside and goes out from the collimator lens 4.

When the voltage applied to the electrode 6b in the liquid crystal device 6 is changed by the liquid crystal driving unit 12 to change the orientation direction of the liquid crystal 6c so as to decrease the refractive index of the liquid crystal device 6, the state becomes equivalent to a state where the light source 1 moves forward (closer to the collimator lens 4) from its position in FIG. 4A as shown in FIG. 4C. The air conversion length in this state is L3 and satisfies the relation of L3 < L1 < L2. In the state of FIG. 4C, a virtual position of the light source 1 is in front of the focal point of the collimator lens 4. Consequently, light from light source 1 and incident on the collimator lens 4 becomes diverging rays traveling to the outside and goes out from the collimator lens 4.

When the refractive index of the liquid crystal device 6 is changed as described above, the air conversion length between the light source 1 and the collimator lens 4 changes according to the refractive index. As a result, the degree of parallelization of the outgoing light from the collimator lens 4 changes. Therefore, by controlling the refractive index of the liquid crystal device 6, the spherical aberration of the objective lens 8 can be corrected. That is, the degree of the spherical aberration of light which goes out from the objective lens 8 is detected by the control unit 11 on the basis of the reflection light from the disc surface received by the light receiving unit 10, a voltage according to the spherical aberration is applied from the liquid crystal driving unit 12 to the electrode 6b in the liquid crystal device 6 to change the refractive index of the liquid crystal device 6, and the degree of parallelization of the outgoing light from the collimator lens 4 is controlled so as to eliminate the spherical aberration. In such a manner, the spherical aberration of the objective lens 8 can be corrected.

According to the embodiment described above, the liquid crystal device 6 is provided in front of the collimator lens 4. Consequently, unlike the case where the liquid crystal device 56 is provided in front of the objective lens 58 as shown in FIG. 6, it is unnecessary to adjust the axis of the objective lens 58 and that of the liquid crystal device 56 with high precision to prevent occurrence of coma aberration and, accordingly, a process for the adjustment of axis and an adjusting mechanism are unnecessary. As a result, the manufacturing cost can be reduced. In addition, it is unnecessary to assemble the liquid crystal device 6 together with the objective lens 8 in the movable actuator 9. Therefore, as compared with the case where the liquid crystal device 56 is mounted in the movable actuator 59 as shown in FIG. 6, the movable actuator 9 is lighter and the response (sensitivity) of the optical pickup is improved. Further, since the refractive index of the liquid crystal device 6 is changed uniformly, the electrode 6b formed in the substrate 6a of the liquid crystal device 6 can be a single electrode. Therefore, as compared with the structure of providing the plurality of electrodes 56b and controlling the refractive index individually as shown in FIG.7, the structure of the electrode is simpler. Thus, the cost of the liquid crystal device 6 can be reduced, and the control of the refractive index by the liquid crystal driving unit 12 is simpler. Moreover, since wiring for supplying voltage to the electrode 6B of one channel is sufficient, the number of wires is decreased, and the number of works and the space can be reduced.

Since the liquid crystal device 6 is provided on the outside of the movable actuator 9, the location and space are not so regulated at the time of attaching the liquid crystal device 6, and the flexibility of designing improves. Therefore, when a sufficient amount of correction of the spherical aberration cannot be obtained by the single liquid crystal device 6, the case can be easily addressed by providing a plurality of liquid crystal devices 6. Further, another optical part such as a polarizer can be easily provided for the liquid crystal device 6 without positional restrictions.

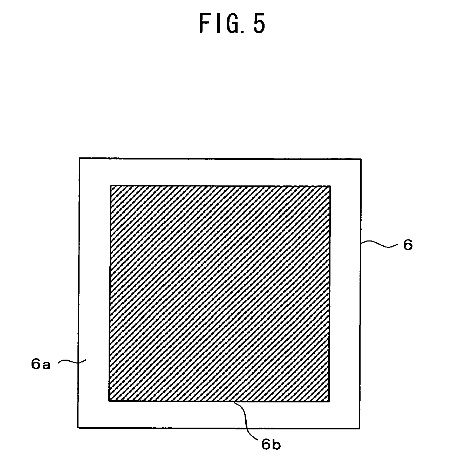

Although the liquid crystal device 6 provided with the disc-shaped electrode 6b as shown in FIG. 3 has been described as an example in the foregoing embodiment, the pattern of the electrode 6b is not limited to a circular shape but may be any shape such as a square as shown in FIG. 5.

In the embodiment described above, the three-wavelength compatible optical pickup device 100 has been described as an example. The present invention can be also applied to optical pickup devices compatible with wavelengths other than three wavelengths.

## Claims

1. An optical pickup device comprising:
a light source for emitting a laser beam;
a collimator lens for converting the laser beam emitted from the light source to parallel rays;
an objective lens for condensing the laser beam passed through the collimator lens onto a surface of an optical disc;
an aperture for regulating numerical aperture of the laser beam incident on the objective lens, thereby forming a light spot having a predetermined size on the disc surface;
a light receiving unit for receiving the light reflected by the disc surface;
a liquid crystal device provided between the light source and the objective lens, and having a pair of substrates facing each other while sandwiching liquid crystal and an electrode of a predetermined pattern provided for each of the substrates; and
a liquid crystal driving unit for driving the liquid crystal device,
the objective lens and the aperture being assembled in a movable actuator,
the liquid crystal driving unit changing refractive index of the liquid crystal device by applying a predetermined voltage to the electrode of the liquid crystal device on the basis of an output of the light receiving unit, and
by the change in the refractive index, spherical aberration of a laser beam going out from the objective lens being corrected,
wherein the liquid crystal device is disposed in front of the collimator lens when viewed from the light source,
each of the electrodes in the liquid crystal device is a single electrode formed in a wide range in the substrate,
the refractive index of a whole electrode region in the liquid crystal device is changed uniformly by application of a voltage to the electrodes, and air conversion length between the light source and the collimator lens is varied to change the degree of parallelization of outgoing light from the collimator lens, thereby correcting spherical aberration.

2. An optical pickup device comprising:
a light source for emitting a laser beam;
a collimator lens for converting the laser beam emitted from the light source to parallel rays;
an objective lens for condensing the laser beam passed through the collimator lens onto a surface of an optical disc; and
a liquid crystal device provided between the light source and the objective lens and correcting spherical aberration of a laser beam going out from the objective lens by changing refractive index,
wherein the liquid crystal device has a pair of substrates facing each other while sandwiching liquid crystal and a single electrode provided for each of the substrates and formed in a wide range in the substrate, and is disposed in front of the collimator lens when viewed from the light source,
the refractive index of a whole electrode region in the liquid crystal device is changed uniformly by application of a predetermined voltage to the electrodes, and air conversion length between the light source and the collimator lens is varied to change the degree of parallelization of outgoing light from the collimator lens, thereby correcting spherical aberration.
